# EUROPEAN PATENT APPLICATION

(11) **EP 2 659 995 A1**
(43) Date of publication of application: **06.11.2013**
(21) Application number: 12840878.8
(22) Date of filing: 23.03.2012
(51) Int. Cl.: B22C 5/04

(54) **ANTI-DRIP VALVE FOR SAND MIXER**

(71) Applicant: Loramendi, S.COOP., 01010 Vitoria-Gasteiz (ES)
(72) Inventor: MARTINEZ CORRAL, Luis Maria, E-01010 Vitoria-Gasteiz (Alava) (ES)
(74) Representative: Carpintero Lopez, Francisco
(86) International application number: PCT/ES2012/070196
(87) International publication number: WO 2013/140001

(57) **Abstract**

The present invention relates to a valve for introducing resin in a sand mixing machine, comprising a valve body (2) with a fixed valve seat (8'), and an actuator (1) comprising a stem (1') provided with a plug (5) movable with said stem between a valve close position in which the plug (5) is in contact with the fixed seat (8') and a valve open position in which the plug (5) is not in contact with the fixed seat (8'). The plug (5) is fixed in the stem (1') with a clearance such that it can move with respect to said stem (1') in a direction perpendicular to said axial direction to facilitate the automatic centering of the plug (5) with respect to the fixed seat (8').

## Description

### Technical Field of the Invention

The invention is comprised in the field of valves used for controlling the entrance of resin in a sand mixing machine.

### Backaround of the Invention

Elements such as cores, molds and other risering elements made of sand agglutinated with a resin are normally used in foundries. The sand is usually prepared in a mixer, where it is mixed with the suitable amount of resin binder. The mold or core is cured once it has been manufactured, and catalysts accelerating the curing process, i.e., the hardening of the resin which causes compaction of the sand, are used to that end.

The mixer basically consists of a tank with mixing blades. The sand is usually introduced in the tank from a hopper through a worm screw or the like. On the other hand, the resin is usually introduced in the tank of the mixer through one or more resin metering valves, which are usually located on the ceiling of the tank. The resin from the corresponding deposit is injected so that it falls onto the sand mass while the valve is open. Once the valve is closed, it is desirable that resin does not drip in during the mixing process, and especially once the mixed sand is removed, so that during the next mixing there is no resin adhered to the inner walls of the mixer, which could produce lumps in the molds or cores obtained after that new mixing and the subsequent rejection thereof for being faulty.

Therefore, it is desirable for the resin binder metering valve to not drip once it is closed so that the new sand mass does not have resin lumps that will produce the aforementioned negative effect.

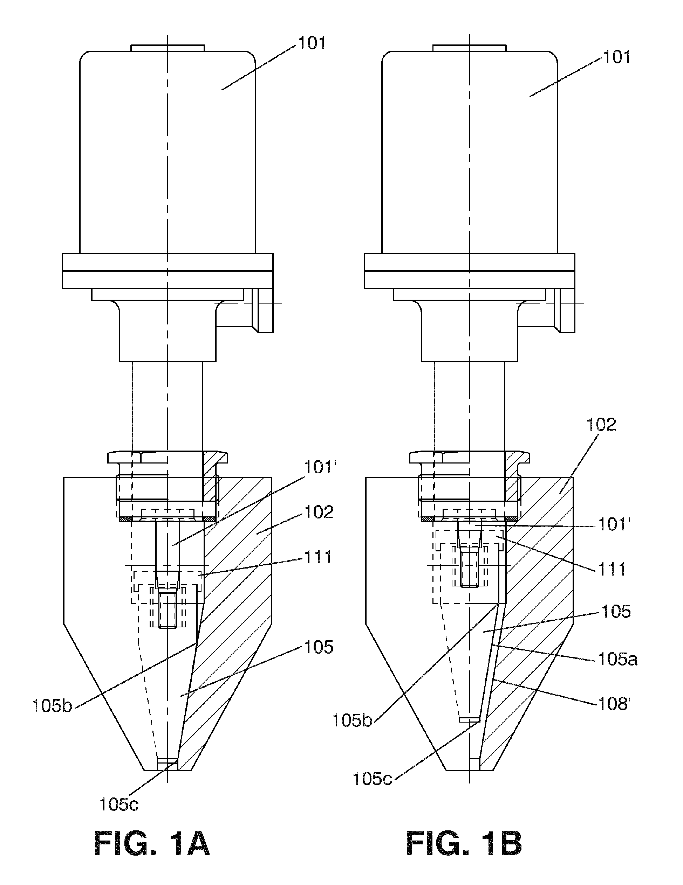

Figures 1A and 1B show a configuration proposal for such valve different from the present invention. Said proposal comprises a valve body 102 that can be coupled to a tank, an actuator 101, and a plug 105 coupled at one end of a stem 101' of the actuator 101, such that the actuator 101 can move the plug 105 between a valve closed position (Figure 1 A) and a valve open position (Figure 1 B). The outer surface of the plug 105 has a contact portion 105a having a conical or frustoconical configuration intended for contacting an also conical- or frustoconical-shaped contact portion 108' of the valve body 102. The actuator also comprises a washer 111 the upward movement of which in the stem 101' is limited by a frustoconical part of the stem, as can be seen in Figures 1A and 1B. The upper part of the plug abuts against said washer 111. In this proposal, the plug has a Teflon surface and the contact portions 105a and 108' are elongated; specifically, the plug is configured to establish contact with the fixed seat of the valve body 102 along the contact portion 105a, between a starting point 105b and an end point 105c separated by several centimeters. In other words, it can be said that the contact surface (or the sought contact surface) has a length of several centimeters.

At a first glance, this configuration may seem suitable. However, it has been found that the wide extension of the contact surface between plug and fixed seat can give rise to leaks because it is possible that contact is not established homogenously along the contact surfaces 105a and 108', but rather at some points. It is further considered that the use of Teflon, may entail problems due to wear or deformation even though at a first glance it may seem ideal for reducing friction and sticking.

It has been considered that it may be convenient to provide an alternative valve having at least one advantage with respect to the proposal described above.

### Description of the Invention

A first aspect of the invention relates to a valve for introducing resin in a sand mixing machine, of the type used for manufacturing cores, molds, etc., in foundries. The valve comprises:
a valve body configured to enable being fixed in a sand mixing machine (for example, in the ceiling of the machine, to allow the controlled entrance of resin into the tank of the machine), the valve body being provided with a fixed valve seat; and
an actuator comprising a stem movable in an axial direction, said stem being provided with a plug movable with said stem between a valve close position in which the plug (or a moving plug seat part) is in contact with the fixed seat and a valve open position in which the plug is not in contact with the fixed seat.

According to the invention, the plug is fixed in said stem with a clearance such that it can move with respect to said stem in a direction perpendicular to said axial direction (for example, if the axial direction is vertical, the plug can move in the horizontal direction) to allow automatic centering between the plug and the fixed seat. The clearance therefore allows automatic centering of the plug when it comes into contact with the fixed seat during the valve closing operation. The risk of a faulty valve closing occurring is therefore reduced, so the risk of resin dripping occurring when the valve is supposedly closed is reduced. To facilitate the automatic centering, the plug and/or the fixed seat can have surfaces configured to contribute to such automatic centering occurring when the plug comes into contact with the fixed seat. For example, the plug and/or the fixed seat can have a surface arranged at an acute angle with respect to the longitudinal axis of the stem to contribute to the automatic centering. For example, the plug and/or the fixed seat can have a conical or frustoconical or partially conical or frustoconical surface. For example, both the plug and the fixed seat can have frustoconical (or partially frustoconical or conical) surfaces arranged to facilitate the automatic centering when the plug comes into contact with the fixed seat.

In some embodiments of the invention, the plug can move in said direction perpendicular to the axial direction with a range of motion less than 0.3 mm. The clearance can be small, but it serves to allow automatic centering of the plug with respect to the fixed seat when the plug comes into contact with the fixed seat.

The plug can be fixed in the stem by means of a screw that traverses a through hole in the plug and is screwed in at one end of the stem. It is therefore easy to replace the plug if, for example, it begins to become worn or if it becomes deteriorated due to the sticking of material. The screw is simply unscrewed and the plug removed to replace, repair and/or clean it. Clearance can exist both between the plug and the screw and between the plug and the stem. The screw can be an Allen screw, in which case the screw can be removed with a simple Allen wrench.

The valve can comprise a washer assembled in the stem such that it abuts against a frustoconical part of the stem, and such that the plug abuts against said washer. The plug is therefore retained between washer and screw such that it cannot move in the axial/vertical direction but can move in the lateral/horizontal direction, according to that allowed by the mentioned clearance.

The fixed seat can be part of a piece screwed in the valve body. The fixed seat can therefore be easily removed to be replaced with another one and/or to be repaired or cleaned, and also to allow removing the plug through the free space left by the piece with the fixed seat when removed.

The plug can have a frustoconical contact surface configured to contact a contact surface of the fixed seat, establishing a contact area when the valve is closed. The contact surface of the fixed seat can also be frustoconical. The use of such inclined surfaces can facilitate the automatic centering of the plug.

The contact area can have a length of less than 1 cm, preferably less than 5 mm, more preferably less than 3 mm. The use of contact surfaces or areas with reduced length, i.e., with a reduced distance between the beginning and the end of the contact area, can serve to reduce the risk of any irregularity or dirt at any point of a contact surface giving rise to an incomplete valve closing.

The plug and the fixed seat can be made of brass or at least have brass contact surfaces. In other words, both the plug and the piece of the fixed seat can be made of brass, or at least the parts forming the contact surfaces between plug and fixed seat can be made of brass. It has been found that brass can be an ideal material due to its mechanical and elasticity characteristics. However, other materials can also be used. Nevertheless, it may be preferable for the plug and the fixed seat to have contact surfaces that are not made of Teflon or that do not comprise Teflon. The problems involved with using Teflon concerning wear are prevented if there is no Teflon in the contact surfaces between plug and fixed seat.

Another aspect of the invention relates to a sand mixing machine, comprising a tank mixer and at least one valve for introducing resin into the tank. The valve is a valve such as that described above. The valve can be located in the ceiling of the tank, for example, with the valve body screwed to the ceiling of the tank. The machine can comprise sand inlet, mixing blades, etc., as is conventional.

### Description of the Drawings

To complement the description and for the purpose of aiding to better understand the features of the invention according to a preferred practical embodiment thereof, a set of drawings is attached as an integral part of the description in which the following has been depicted with an illustrative and non-limiting character:
Figures 1A and 1B are schematic vertical cross-section views of a valve according to a proposal different from the present invention in the closed and open state, respectively.
Figures 2A and 2B are schematic vertical cross-section views of a valve according to an embodiment of the present invention in the closed and open state, respectively.
Figures 3A and 3B are enlarged views of a part of what is seen in Figures 2A and 2B, respectively.
Figure 4 is a schematic side view of a sand mixing machine according to a possible embodiment of the invention.

### Preferred Embodiment of the Invention

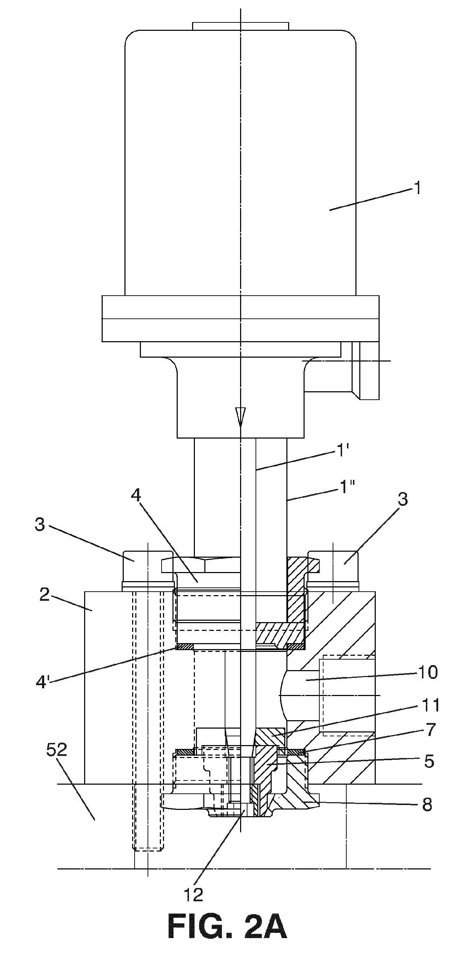

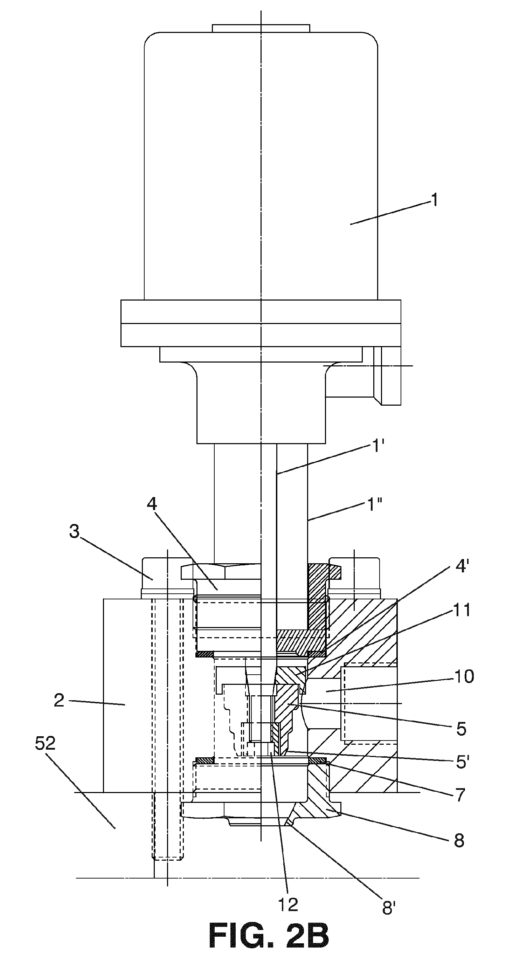

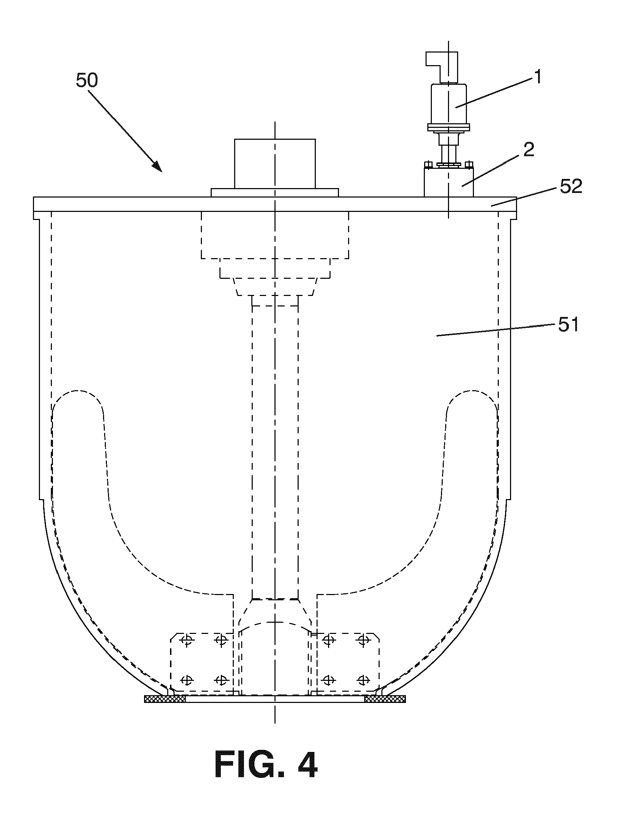

According to this embodiment of the invention, the valve comprises a valve body 2 which is fixed to the ceiling 52 of the mixing machine 50 (see Figure 4) by means of screws 3 (see Figures 2A and 2B). A side conduit 10 communicates the valve with the resin injection pump (not illustrated). On the other hand, the valve comprises an actuator 1 which is attached to the valve body 2 through a cylindrical extension 1" at the end of which a nut 4 that is screwed in an upper hole of the valve body 2 is secured. A sealing gasket 4' is arranged between said nut 4 and the valve body 2.

The actuator 1 is provided with a stem 1' at the end of which the plug 5 is assembled, such that the plug 5 moves with the stem 1' in the axial direction of the stem 1' (i.e., in the vertical direction according to the arrangement illustrated in Figures 2A-3B). A washer 11 the movement of which in the direction of the actuator is limited by the conical or frustoconical shape that the stem 1' has in that area is assembled in said stem 1'.

In this embodiment of the valve, the fixed valve seat 8' is configured in a piece 8 that is screwed in the lower part of the valve body 2. A sealing gasket 7 is arranged between the valve body 2 and said piece 8. This arrangement, with the fixed seat 8' formed in a piece 8 that can be removed by unscrewing it, allows the quick replacement of the plug in the event of breaking or wear, without having to remove other parts of the valve or of the plug or remove the entire valve.

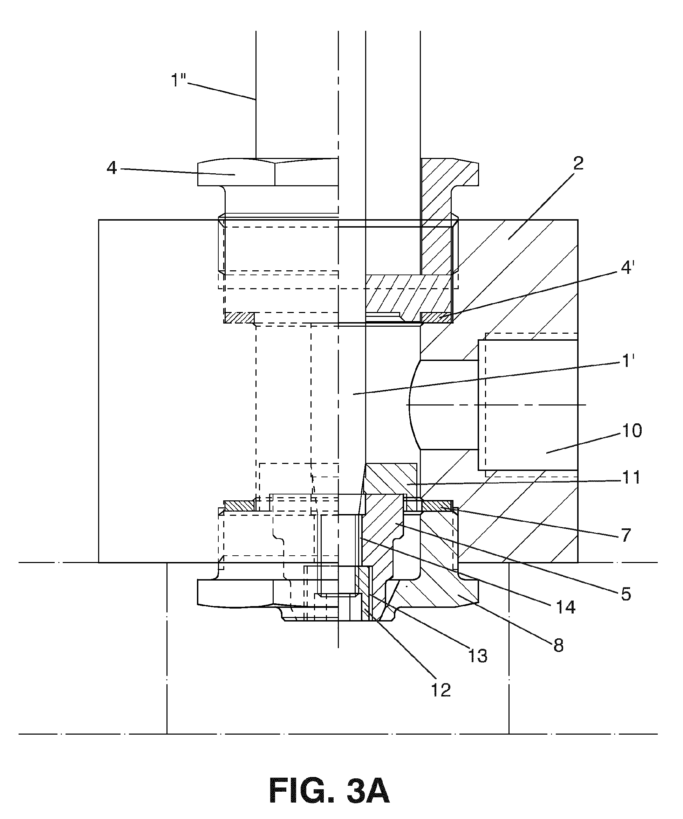

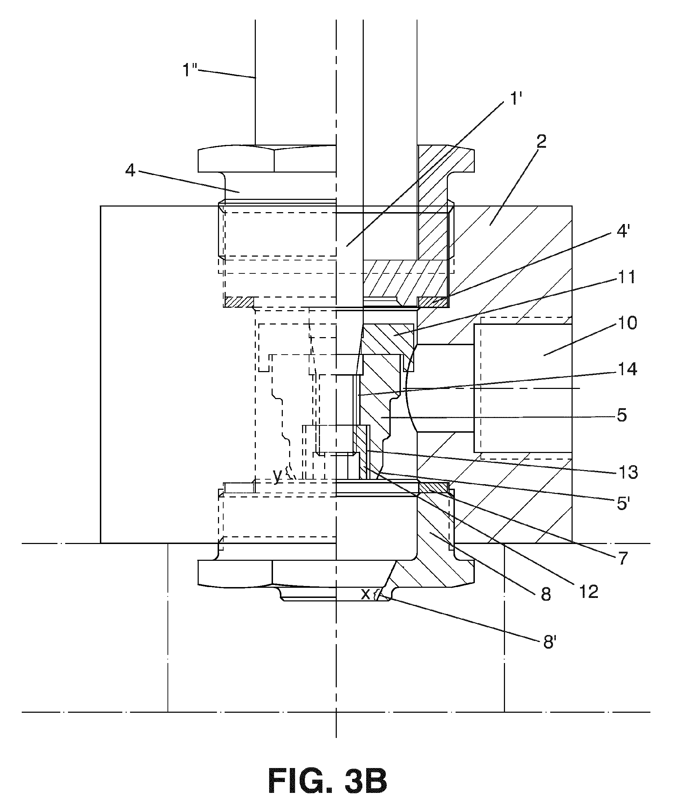

The plug 5 is assembled to allow automatic centering in relation to the fixed seat 8', such that the coupling between the moving seat 5' (which is part of the plug 5) and the fixed seat 8' is always as perfect as possible. To that end, the plug is fixed to the stem 1' by means of an Allen screw 12 that traverses the plug and is screwed in at the end of the stem 1' and achieves tightening it against the washer 11. The plug 5 is therefore retained between the Allen screw 12 and the washer 11. However, there is a clearance 13 between the Allen screw 12 and the plug 5 and there is also a clearance 14 between the plug 5 and the stem (see Figures 3A and 3B). These clearances determine certain floatability of the plug 5, allowing the automatic centering thereof so that the coupling between the fixed and moving seats is as perfect as possible. In other words, the plug can move in a direction perpendicular to the lateral direction with a range of motion allowing the automatic centering.

Another advantageous feature is that the dimensions of the seats are minimal to facilitate complete coupling between the fixed and moving seats. As a result, the length x of the frustoconical contact surface of the fixed seat 8' and the length *y* of the frustoconical contact surface of the plug 5 can be less than 3 mm, for example, in the order of 2 mm. It has been found that using these reduced dimensions can reduce the risk of faulty valve closing.

In this embodiment of the invention, both the plug 5 and the closing piece 8 are made of brass, a material that can be suitable because it has mechanical and elasticity characteristics which can facilitate good coupling. It is also possible to use other suitable metals or alloys, although it can be preferable to not use Teflon in any of the surfaces.

Figure 4 reflects a sand and resin mixing machine with a tank 51 in the ceiling 52 of which the valve body 2 is screwed.

In this text, the word "comprises" and its variants (such as "comprising", etc.) must not be interpreted in an excluding manner, i.e., they do not exclude the possibility that what has been described may include other elements, steps, etc.

On the other hand, the invention is not limited to the specific embodiments described but rather also covers, for example, the variants which can be devised by the person having ordinary skill in the art (for example, concerning the choice of materials, dimensions, components, configuration, etc.) within what is inferred from the claims.

## Claims

1. Valve for introducing resin in a sand mixing machine, comprising:
a valve body (2) configured to enable being fixed in a sand mixing machine, the valve body (2) being provided with a fixed valve seat (8'); and
an actuator (1) comprising a stem (1') movable in an axial direction, said stem (1') being provided with a plug (5) movable with said stem (1') between a valve close position in which the plug (5) is in contact with the fixed seat (8') and a valve open position in which the plug (5) is not in contact with the fixed seat (8');
**characterized in that**
the plug (5) is fixed in said stem (1') with a clearance such that it can move with respect to said stem (1') in a direction perpendicular to said axial direction.

2. Valve according to claim 1, wherein the plug (5) can move in said direction perpendicular to the axial direction with a range of motion less than 0.3 mm.

3. Valve according to any of the preceding claims, wherein the plug (5) is fixed in the stem (1') by means of a screw (12) that traverses a through hole in the plug (5) and is screwed in at one end of the stem (1').

4. Valve according to claim 3, wherein said screw (12) is an Allen screw.

5. Valve according to any of the preceding claims, comprising a washer (11) assembled in the stem (1') such that it abuts against a frustoconical part of the stem (1'), the plug (5) abutting against said washer (11).

6. Valve according to any of the preceding claims, wherein the fixed seat (8') is part of a piece (8) screwed in the valve body (2).

7. Valve according to any of the preceding claims, wherein the plug (5) has a frustoconical contact surface configured to contact a contact surface of the fixed seat (8'), establishing a contact area when the valve is closed.

8. Valve according to claim 7, wherein said contact surface of the fixed seat (8') is frustoconical.

9. Valve according to claim 7, wherein said contact area has a length (x, y) of less than 1 cm, preferably less than 5 mm, more preferably less than 3 mm.

10. Valve according to any of the preceding claims, wherein the plug (5) and the fixed seat (8') have brass contact surfaces.

11. Valve according to any of the preceding claims, wherein the plug (5) and the fixed seat (8') have contact surfaces that do not comprise Teflon.

12. Sand mixing machine, comprising a mixing tank (51) and at least one valve for introducing resin into the tank, **characterized in that** the valve is a valve according to any of the preceding claims.
